(19) **Europäisches Patentamt**
**European Patent Office**
**Office européen des brevets**

(11) **EP 4 685 961 A1**

(12) **EUROPEAN PATENT APPLICATION**
published in accordance with Art. 153(4) EPC

(43) Date of publication:
**28.01.2026 Bulletin 2026/05**

(21) Application number: **24878485.2**

(22) Date of filing: **30.05.2024**

(51) International Patent Classification (IPC):
***H01M 50/249*** (2021.01)

(52) Cooperative Patent Classification (CPC):
**B23K 20/10; B23K 20/26; H01M 50/172;
H01M 50/204; H01M 50/244; H01M 50/249;
H01M 50/289; H01M 50/533; H01M 50/536;
Y02E 60/10**

(86) International application number:
**PCT/CN2024/096382**

(87) International publication number:
**WO 2025/081832 (24.04.2025 Gazette 2025/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.10.2023 CN 202311359896**

(71) Applicant: **Contemporary Amperex Technology
Co., Ltd.
Ningde, Fujian 352100 (CN)**

(72) Inventors:
• **WU, Kai
Ningde, Fujian 352100 (CN)**
• **CHEN, Congsheng
Ningde, Fujian 352100 (CN)**
• **LIN, Wenfa
Ningde, Fujian 352100 (CN)**
• **DING, Yu
Ningde, Fujian 352100 (CN)**
• **HUANG, Biao
Ningde, Fujian 352100 (CN)**

(74) Representative: **Kraus & Lederer PartGmbB
Thomas-Wimmer-Ring 15
80539 München (DE)**

(54) **BATTERY CELL, BATTERY, ELECTRIC DEVICE, ULTRASONIC WELDING HEAD, AND ULTRASONIC WELDING DEVICE**

(57) Disclosed are a battery cell (102), a battery (100), a power consuming apparatus, an ultrasonic welding head (400), and an ultrasonic welding apparatus (2000), belonging to the technical field of batteries. The battery cell (102) includes a case (1), a terminal post (2), and an electrode assembly (7). The terminal post (2) is provided with ten cases (1). The electrode assembly (7) includes an active material coating portion (71) provided in the ten cases (1), and a tab portion (72) electrically connected to the active material coating portion (71) and the terminal posts (2). The tab portion (72) includes multiple tab sheets (721). The multiple tab sheets (721) are stacked and connected to form a gathered portion (722). The gathered portion (722) has a first area (7221) and a second area (7222). A compaction degree of the multiple tab sheets (721) in the first area (7221) is greater than that in the second area (7222). A connecting portion (8) is formed at a position of the gathered portion (722) used for being electrically connected to the terminal post (2). At least part of an edge (81) of the connecting portion (8) on the gathered portion (722) is located in the first area (7221).

FIG. 1

EP 4 685 961 A1

# Description

## CROSS-REFERENCE TO RELATED APPLICATIONS

The present application is made based on and claims priority to Chinese Patent Application No. 202311359896.8, filed with the China National Intellectual Property Administration on October 19, 2023, which is incorporated herein by reference in its entirety.

## TECHNICAL FIELD

The present application relates to the technical field of batteries, and in particular to a battery cell, a battery, a power consuming apparatus, an ultrasonic welding head, and an ultrasonic welding apparatus.

## BACKGROUND

In recent years, new energy vehicles have made a leap forward in development. In the field of electric vehicles, power batteries play an irreplaceable important role as the power sources of electric vehicles. A power battery includes multiple battery cells. However, the reliability of the battery cells needs to be improved.

## SUMMARY

Examples of the present application provide a battery cell, a battery, an electrode assembly, an ultrasonic welding head, and an ultrasonic welding apparatus, which can improve the reliability of the battery cell.

According to a first aspect, an example of the present application provides a battery cell, which includes a case, a terminal post, and an electrode assembly. The terminal post is arranged on the case. The electrode assembly includes an active material coating portion arranged in the case, and a tab portion electrically connected to the active material coating portion and the terminal post. The tab portion includes multiple tab sheets. The multiple tab sheets are stacked and connected to form a gathered portion. The gathered portion has a first area and a second area. A compaction degree of the multiple tab sheets in the first area is greater than that in the second area. A connecting portion is formed at a position of the gathered portion used for being electrically connected to the terminal post. At least part of an edge of the connecting portion on the gathered portion is located in the first area.

In the above technical solution, by configuring the multiple tab sheets to have a higher compaction degree in the first area than in the second area, and configuring at least part of the edge of the connecting portion on the gathered portion formed at the position of the gathered portion used for being electrically connected to the terminal post to be in the first area, at least part of the edge of the connecting portion is located in the relatively compacted area of the gathered portion, thus improving a problem that cracks appear on the edge of the connecting portion, improving a conductive yield rate and a connection strength of the position of the tab portion used for being electrically connected to the terminal post, and improving the reliability of the battery cell.

In addition, by configuring the multiple tab sheets to have a lower compaction degree in the second area than in the first area, the multiple tab sheets are slightly insufficiently welded at interlayer in the second area. When welding to form the gathered portion and welding the gathered portion with the terminal post or the adapter sheet, a pulling stress at the connecting position between the first area and the second area can be reduced through the deformation of the tab sheets that are slightly insufficiently welded in the second area, thus improving the problem that the tab sheets crack at a junction between the first area and the second area. In addition, when welding the gathered portion with the terminal post or the adapter sheet, the pulling stress at the junction between the first area and the connecting portion can be reduced through the deformation of the tab sheets that are insufficiently welded in the second area, thus further reducing the problem that cracks appear on the edge of the connecting portion.

In some examples, a part of the edge of the connecting portion on the gathered portion is located in the second area.

In the above technical solution, since the multiple tab sheets have a lower compaction degree in the second area than in the first area, the tab sheets are relatively prone to deformation in the second area. When welding the gathered portion with the terminal post or the adapter sheet to form the connecting portion, since the part of the edge of the connecting portion on the gathered portion is located in the second area, the deformation of the tab sheets in the second area can be bettered utilized, thus satisfying a welding shrinkage requirement, reducing the pulling stress on the edge of the connecting portion, and further reducing the problem that cracks appear on the edge of the connecting portion.

In some examples, the part of the edge of the connecting portion on a surface of the gathered portion is a contour line, the contour line includes a first line segment located in the first area and a second line segment located in the second area, and a length of the first line segment is greater than a length of the second line segment.

In the above technical solution, since a part of the contour line is more located in the first area than in the second area, the part of the edge of the connecting portion is more located in the first area than in the second area, thus significantly reducing the cracks on the edge of the connecting portion, improving the conductive yield rate and connection strength of the position of the tab portion used for being electrically connected to the terminal post, and improving the reliability of the battery cell.

In some examples, multiple first areas are provided, adjacent first areas are spaced apart by the second area, multiple first line segments are provided and spaced apart, the multiple first line segments are respectively and correspondingly located in the multiple first areas, and adjacent first line segments are connected by the second line segments.

In the above technical solution, the tab sheets spaced apart in the second area between adjacent first areas can more fully exert the deformation effect, thus satisfying the welding shrinkage requirement, further reducing the pulling stress on the edge of the connecting portion, significantly reducing the cracks on the edge of the connecting portion, improving the conductive yield rate and connection strength of the position of the tab portion used for being electrically connected to the terminal post, and further improving the reliability of the battery cell.

In some examples, the contour line is long ring-shaped, two first areas are provided and spaced apart along a width direction of the contour line, the first areas are formed as long strip-shaped areas extending along a length direction of the contour line, and two long sides of the contour line are respectively and correspondingly located in the two first areas.

In the above technical solution, the structure and shape of the connecting portion are simple, thus facilitating formation through laser welding and the like. Moreover, by configuring the number and distribution positions of the first areas in this way, the space of the accommodating portion can be fully utilized, so that on the premise of satisfying the formation of the strip-shaped connecting portion, the first line segments are longer than the second line segments, the part of the edge of the connecting portion that is located between the two first areas can be more easily deformed to meet the welding shrinkage requirement, the part of the edge of the connecting portion that is located in the first areas is larger, and the area that cracks are not easily formed is larger, thus significantly improving the conductive yield rate and connection strength of the position of the tab portion used for being electrically connected to the terminal post, and improving the reliability of the battery cell.

In some examples, the width direction of the contour line is longitudinal, a longitudinal spacing between the two first areas is $G_0$, a longitudinal width of the first areas is $W_0$, the connecting portion is a weld and a maximum longitudinal weld width is $W_1$, a standard deviation of the maximum longitudinal weld width is $[\sigma]$, and a longitudinal fluctuation value of a assembling of the gathered portion is $\omega$, where $W_1 - 3[\sigma] - \omega \geq G_0$, and $W_1 + 3[\sigma] + \omega \leq G_0 + 2W_0$.

In the above technical solution, the edges of the two sides of the width of the weld can be enabled to be reliably located in the first areas, thus effectively reducing cracks on the edge of the weld, improving the conductive yield rate and connection strength of the position of the tab portion used for being electrically connected to the terminal post, and improving the reliability of the battery cell.

In some examples, the two first areas are arranged in parallel and symmetrically.

In the above technical solution, the space of the gathered portion can be fully utilized to increase the area and coverage of the first areas and facilitate the separation of the two second areas through the second area, thus facilitating the processing of the first areas and the second area, and reducing the processing difficulty of the gathered portion. Moreover, when welding the tab portions and the gathered portion, since the two first areas are arranged in parallel and symmetrically, the ultrasonic welding head can weld along the length direction of the first areas between the two first areas, so that the edges of the two sides of the width of the weld can very easily be located in the first areas on the two sides, thus reducing the welding difficulty and improving the welding efficiency.

In some examples, the tab portion forms the gathered portion through ultrasonic welding, and a total area of all the first areas is S and less than or equal to a critical area $S_0$, where $S_0 = P \times (\pi \times D^2 \times \gamma \div 4) \div ([\sigma_{0.2}] \times \varphi)$, P is a pressure of compressed air inputted to an ultrasonic welding apparatus, D is a cylinder diameter of the ultrasonic welding apparatus, $\gamma$ is a proportion of pressure applied in the first areas, $[\sigma_{0.2}]$ is a yield strength of the tab sheets, and $\varphi$ is a residual strength coefficient of the tab sheets under an action of welding heat.

In the above technical solution, it can meet the requirement that the pressure in the first areas during ultrasonic pre-welding is greater than or equal to the yield strength of the tab sheets under the softening action of welding heat, so that the tab sheets can undergo plastic deformation well, and the first areas can achieve a more effective compaction effect.

In some examples, the first area is an area with a highest compaction degree on the gathered portion.

In the above technical solution, at least part of the edge of the connecting portion on the gathered portion formed at the position of the gathered portion used for being electrically connected to the terminal post is arranged in the first area with the highest compaction degree, thus more effectively improving the problem that cracks appear on the edge of the weld, more effectively improving the conductive yield rate and connection strength of the position of the tab portion used for being electrically connected to the terminal post, and improving the reliability of the battery cell.

In some examples, the gathered portion is composed of the first areas and the second area.

In the above technical solution, the composition and processing of the gathered portion can be simplified, the processing difficulty of the gathered portion can be reduced, and the processing quality of the gathered portion can be improved.

In some examples, the gathered portion is directly welded to the terminal post to form the connecting portion jointly through the gathered portion and the terminal post.

In the above technical solution, the problem that cracks appear on the edge of the first weld formed between the gathered portion and the terminal post can be improved, thus improving the conductive yield rate and connection strength of the tab portions and the terminal post, and improving the reliability of the battery cell.

In some examples, the battery cell further includes an adapter sheet, the gathered portion is indirectly connected to the terminal post through the adapter sheet, and the gathered portion is directly welded to the adapter sheet to form the connecting portion jointly through the gathered portion and the adapter sheet.

In the above technical solution, the problem that cracks appear on the edge of the second weld formed between the gathered portion and the adapter sheets can be improved, thus improving the conductive yield rate and connection strength of the tab portions and the adapter sheets, and improving the reliability of the battery cell.

In some examples, the terminal post includes a terminal post body mounted to the case, an accommodating groove is formed on the terminal post body, and at least part of the gathered portion is accommodated in the accommodating groove and welded with the terminal post body.

In the above technical solution, at least part of the gathered portion is accommodated in the accommodating groove, so that at least part of the gathered portion occupies the space in the accommodating groove, thus reducing the space occupied by the gathered portion in the case, saving the space in the case to accommodate a larger volume of active material coating portion, and helping to improve the energy density of the battery cell, or helping to reduce the size of the battery cell without changing the energy density of the battery cell.

In some examples, an accommodating cavity is formed in the case, the accommodating groove is open towards a direction away from the accommodating cavity, the terminal post body is provided with a communicating hole, the communicating hole runs through a sidewall of the accommodating groove close to the accommodating cavity and communicates the accommodating cavity with the accommodating groove, and the gathered portion is arranged in the communicating hole in a penetrating manner.

In the above technical solution, when filling an electrolyte into the battery cell, the electrolyte can be filled into the accommodating groove and then flow towards the accommodating cavity through the communicating hole. The accommodating groove can play a role of buffering the electrolyte, so as to improve problems such as electrolyte splashing and overflow. Moreover, the sidewall of the accommodating groove can to some extent prevent the electrolyte from splashing, reduce the pollution caused by the electrolyte to the outside, and facilitate rapid filling. Besides, since there is no need to separately open an electrolyte filling channel in the case, no special processing is required for the case, thus helping to reduce the structural complexity and processing difficulty of the case.

In some examples, the terminal post includes a terminal post cover plate covering the terminal post body, an electrolyte filling hole communicated with the accommodating groove is formed in the terminal post cover plate, and the battery cell further includes a sealing structure used for sealing the electrolyte filling hole.

In the above technical solution, by forming the electrolyte filling hole in the terminal post cover plate, the opening is relatively small and located outwards, thus easily achieving the reliable sealing of the electrolyte filling inlet through a sealing structure, improving the working reliability of the battery cell, and achieving the flexible and diversified design of the sealing structure.

According to a second aspect, an example of the present application further provides a battery, which includes the battery cell according to any solution described above.

In the above technical solution, since the reliability of the battery cell according to the example of the present application is improved, the performance of the battery is improved.

According to a third aspect, an example of the present application further provides a power consuming apparatus, which includes the battery according to any solution described above.

In the above technical solution, since the performance of the battery is improved, the working power performance of the power consuming apparatus is improved.

According to a fourth aspect, an example of the present application further provides an ultrasonic welding head used for processing the gathered portion according to any one solution described above, where a welding surface of the ultrasonic welding head includes a first surface portion and a second surface portion, the first surface portion protrudes from the second surface portion, the first surface portion is used for correspondingly processing the first area, and the second surface portion is used for correspondingly processing the second area.

In the above technical solution, during the ultrasonic pre-welding of the gathered portion, since the first surface portion protrudes and the area is smaller than the total area of the welding surface, the first surface portion contacts the tab sheets first and the pressure area is smaller, thus increasing the local pressure. Without changing the pre-welding pressure and energy, the pre-welding force is concentrated at the position of the first area, thus forming the first area with a higher compaction degree, and making the first area close to or become a solid plate structure. In short, in the ultrasonic welding head according to the example of the present application, the welding surface of the ultrasonic welding head includes a first surface portion and a second surface portion, and the first surface portion protrudes from the second surface portion, thus making the compaction degree of the first areas processed by the first surface portion higher than the compaction degree of the second area processed by the second surface portion.

In some examples, the first surface portion is a protruding curved surface.

In the above technical solution, compared to the first surface portion being a flat surface, the protruding curved surface can further reduce the priority contact area, further increase the local pressure, and thus improve the compaction degree by pre-welding; and compared to the first surface portion being a sharp folded surface, it can avoid the problem that the tab sheets are pressed cracked due to the sharp contact between the first surface portion and the tab sheets. In short, it can protect the tab sheets, improve the welding yield rate, and address the problems such as cracks at the pre-welding position on the premise of increasing the compaction degree of the tab sheets through the first surface portion.

In some examples, a cross section of the first surface portion is arc-shaped and has a radius ranging from 0.2 mm to 0.5 mm.

In the above technical solution, since the radius of the first surface portion is not too large, the first surface portion can have a certain protrusion height under a certain width; and since the radius of the first surface portion is not too small, the first surface portion can have a certain width under a certain protrusion height, so that the width and protrusion height of the first surface portion can enable the first area to obtain a larger pre-welding pressure, thus achieving a better deep welding compaction effect, and making the second area achieve a shallow welding effect to have a certain stiffness.

In some examples, the first surface portion and the second surface portion are connected at a connecting position through curved-surface smooth transition.

In the above technical solution, during the process of pre-welding the tab portion through the ultrasonic welding head, when the welding surface of the ultrasonic welding head is in contact with the tab portion and subjected to reaction, since the first surface portion and the second surface portion are connected at the connecting position through curved-surface smooth transition, the situation that the welding surface is cracked at the junction between the first surface portion and the second surface portion due to stress concentration at the connecting position between the first surface portion and the second surface portion can be reduced, thus improving the tab portion pre-welding reliability of the ultrasonic welding head and facilitating the extension of the service life of the ultrasonic welding head. Therefore, for the ultrasonic welding head according to this example of the present application, the structural reliability of the welding surface of the ultrasonic welding head can be improved, and the structural stability of the ultrasonic welding head during the process of pre-welding the tab portion can be improved, thus improving the tab portion pre-welding reliability of the ultrasonic welding head and facilitating the extension of the service life of the ultrasonic welding head.

In some examples, the first surface portion is long strip-shaped and two first surface portions are provided and arranged in parallel.

In the above technical solution, first areas which are long strip-shaped can be processed, and two first areas are provided and arranged in parallel. In this way, when welding the gathered portion with the terminal post or the adapter sheet, the weld can extend along the length direction of the first areas, and the edges of the two sides of the width of the weld can be respectively located in the first areas on the two sides, so that most of the edge of the weld is less likely to crack. Moreover, the parts of the tab sheets in the second area between the two first areas can be easily deformed, thus meeting the welding shrinkage requirement and improving the problem of cracks caused by stress pulling on the edges of the two sides of the width of the weld. Moreover, the space of the gathered portion can be fully utilized to increase the area and coverage of the first areas and increase the length of the weld, thus improving the reliability of the connection between the tab portion and the terminal post or adapter sheet, facilitating the processing of the first areas and the second area, and reducing the processing difficulty of the gathered portion.

In some examples, a protrusion height of the first surface portion relative to the second surface portion ranges from 0.05 mm to 0.2 mm.

In the above technical solution, the protrusion height of the first surface portion is not too small, so that the first areas can obtain a larger pre-welding pressure, thus achieving a better deep welding compaction effect, and the protrusion height of the first surface portion is not too large, so that the second area can also obtain a pre-welding pressure, thus achieving a shallow welding effect and achieving certain stiffness.

According to a fifth aspect, an example of the present application further provides an ultrasonic welding apparatus, which includes a welding seat and the ultrasonic welding head according to any solution described above.

In the above technical solution, since the ultrasonic welding apparatus includes the ultrasonic welding head according to any solution described above, it helps to process the tab portion with the first area and the second area, thus helping to improve the problem of cracks on the edge of the connecting portion formed at the position of the tab portion used for being electrically connected to the terminal post, improving the conductive yield rate and connection strength of the position of the tab portion used for being electrically connected to the terminal post, and improving the reliability of the battery cell.

## BRIEF DESCRIPTION OF THE DRAWINGS

To describe the technical solutions of the examples of the present application more clearly, the following briefly describes the accompanying drawings required for describing the examples. It should be understood that the following accompanying drawings show only some examples of the present application, which should not be considered as limitations on the scope. An ordinary person skilled in the art may still derive other related accompanying drawings according to the accompanying drawings without contributing any inventive labor.

FIG. 1 is a schematic structural diagram of a vehicle according to some examples of the present application;

FIG. 2 is an exploded structural diagram of a battery according to some examples of the present application;

FIG. 3 is a schematic structural diagram of a battery cell according to some examples of the present application;

FIG. 4 is a schematic diagram of an orthographic projection of a battery cell according to some examples of the present application;

FIG. 5 is a cross-sectional view along line A-A in FIG. 4;

FIG. 6 is a partial enlarged view of position B circled in FIG. 5;

FIG. 7 is a schematic diagram of connection between a tab portion and a terminal post according to some examples of the present application;

FIG. 8 is an exploded view of an electrode assembly and a cover plate with terminal posts according to some examples of the present application;

FIG. 9 is a partially enlarged view of position C circled in FIG. 8;

FIG. 10 is a schematic diagram of connection between an electrode assembly and a cover plate with terminal posts according to some examples of the present application;

FIG. 11 is a partial enlarged view of position D circled in FIG. 10;

FIG. 12 is a schematic diagram of assembling between battery cells and busbar components according to some examples of the present application;

FIG. 13 is a schematic diagram of connection between a tab portion and a terminal post through an adapter sheet according to some examples of the present application;

FIG. 14 is a schematic diagram when a tab portion is processed by an ultrasonic welding apparatus according to some examples of the present application;

FIG. 15 is an enlarged view of an ultrasonic welding head shown in FIG. 14.

FIG. 16 is a schematic structural diagram of an ultrasonic welding head according to some examples of the present application;

FIG. 17 is a partial enlarged view of position E circled in FIG. 16;

FIG. 18 is a schematic structural diagram of a welding seat according to some examples of the present application; and
FIG. 19 is a partial enlarged view of position F circled in FIG. 18.

Description of reference numerals: 1000-vehicle; X-first direction; Y-second direction; Z-third direction; 100-battery; 200-controller; 300-motor; 101-box; 1011-first box body; 1012-second box body; 102-battery cell; 103-busbar component; 1-case; 11-accommodating cavity; 2-terminal post; 3-terminal post body; 36-accommodating groove; 37-communicating hole; 4-terminal post cover plate; 43-electrolyte filling hole; 5-adapter sheet; 6-sealing structure, 61-first sealing member; 62-second sealing member; 7-electrode assembly; 71-active material coating portion; 72-tab portion; 721-tab sheet; 722-gathered portion; 7221-first area; 7222-second area; 8-connecting portion; 81-edge; 82-contour line; 821-first line segment; 822-second line segment; 80-first weld; 85-second weld; 2000-ultrasonic welding apparatus; 400-ultrasonic welding head; 9-first welding surface; 91-first surface portion; 92-second surface portion; 500-welding seat; and 501-second welding surface.

## DETAILED DESCRIPTION

To make the purposes, technical solutions and advantages of the examples of the present application clearer, the technical solutions in the examples of the present application will be clearly described below with reference to the drawings in the examples of the present application. Clearly, the described examples are merely some rather than all of the examples of the present application. All other examples obtained by an ordinary person skilled in the art based on the examples of the present application without making any inventive labor still fall within the scope of protection of the present application.

Unless otherwise defined, all technical and scientific terms used in the present application have the same meanings as commonly understood by those skilled in the technical field of the present application. The terms used in the description of the present application are merely for an objective of describing the specific examples, instead of limiting the present application. The terms "comprise", "include" and any variations thereof in the description and claims of the present application and in the above descriptions of the accompanying drawings are intended to cover non-exclusive inclusion. Terms such as "first" and "second" in the description, claims and accompanying drawings of the present application are used for distinguishing different objects, instead of describing a specific order or primary and secondary relationships.

"Example" mentioned in the present application means that particular features, structures, or characteristics described with reference to the example may be included in at least one example of the present application. The phrase appearing at different positions of the description may not necessarily refer to the same example or an independent or alternative example that is mutually exclusive with another example.

In the descriptions of the present application, it should be noted that, unless otherwise expressly specified and limited, the terms "mount", "connect", "connected" and "attach" should be understood in a broad sense. For example, the connection may be a fixed connection, a detachable connection, or an integral connection; or the connection may be a direct connection, an indirect connection through an intermediate medium, or internal communication between two elements. For an ordinary person skilled in the art, the specific meanings of the above terms in the present application may be interpreted according to the specific situations.

The term "and/or" in the present application only describes an association relationship for describing associated objects and represents that three relationships may exist. For example, A and/or B may represent the following three cases: only A exists, both A and B exist, and only B exists. In addition, the character "/" in the present application generally indicates an "or" relationship between the associated objects.

In the examples of the present application, the same reference numerals represent the same components, and for the sake of simplicity, detailed descriptions of the same components are omitted in different examples. It needs to be understood that the thickness, length, width, and other dimensions of various components in the examples of the present application shown in the accompanying drawings, as well as the overall thickness, length, width, and other dimensions of the integrated apparatus, are only exemplarily descriptive and should not constitute any limitation on the present application.

"Multiple" appearing in the present application means two or more (including two).

In the present application, battery cells may include a lithium-ion secondary battery, a lithium-ion primary battery, a lithium-sulfur battery, a sodium-lithium-ion battery, a sodium-ion battery, a magnesium-ion battery, or the like, without limitation in the examples of the present application. The battery cell may be in a cylindrical shape, a flat shape, a cuboid shape, or other shapes, which is not limited in the examples of the present application, either. Generally, battery cells are classified into three types based on encapsulating methods: columnar battery cells, square battery cells, and pouch battery cells, which are not limited in the examples of the present application, either.

A battery mentioned in the examples of the present application refers to a single physical module including one or more battery cells to provide a higher voltage and capacity. For example, the battery mentioned in the present application may include a battery module, a battery pack, or the like. The battery module generally includes multiple battery cells. The battery pack generally includes a box for encapsulating one or more battery cells or one or more battery modules. The box can prevent liquid or other foreign objects from affecting the charging or discharging of the battery cell.

Each battery cell includes a case, an electrode assembly, and an electrolyte solution. The case is used for accommodating the electrode assembly and the electrolyte solution. At least one electrode assembly is accommodated in the case. The electrode assembly is composed of a positive electrode plate, a negative electrode plate, and a separator. The electrode assembly may be a wound structure or a stacked structure. The battery cell works mainly relying on the movement of metal ions between the positive electrode plate and the negative electrode plate.

The positive electrode plate generally includes a positive electrode current collector and a positive electrode active material layer. The positive electrode active material layer is directly or indirectly coated on the positive electrode current collector. The positive electrode current collector not coated with the positive electrode active material layer protrudes from the positive electrode current collector already coated with the positive electrode active material layer. The positive electrode current collector not coated with the positive electrode active material layer is used as a positive electrode tab. Taking a lithium-ion battery as an example, a material of the positive electrode current collector may be aluminum, and a material of the positive electrode active material layer may be lithium cobalt oxide, lithium iron phosphate, ternary lithium, lithium manganese oxide, or the like.

The negative electrode plate generally includes a negative electrode current collector and a negative electrode active material layer. The negative electrode active material layer is directly or indirectly coated on the negative electrode current collector. The negative electrode current collector not coated with the negative electrode active material layer protrudes from the negative electrode collector already coated with the negative electrode active material layer. The negative electrode current collector not coated with the negative electrode active material layer is used as a negative electrode tab. A material of the negative electrode current collector may be copper. A material of the negative electrode active material may be carbon, silicon, or the like.

To ensure that no fusing occurs when a large current passes through, multiple positive electrode tabs are provided and stacked together to form a tab portion of the positive electrode, and multiple negative electrode tabs are provided and stacked together to form a tab portion of the negative electrode. The case is provided with terminal posts. The tab portion of the positive electrode is electrically connected to the terminal post of the positive electrode, and the tab portion of the negative electrode is electrically connected to the terminal post of the negative electrode.

In related technologies, multiple layers of tab sheets that are stacked are welded together through ultrasonic welding to form plate-shaped tab portion, and then the welded plate-shaped tab portion is welded to the corresponding terminal post through laser welding to achieve connection and electrical conductivity with the terminal post. However, a welding head commonly used for ultrasonic welding has uniform welding teeth. Due to the insufficient pressure and energy provided by the ultrasonic welding apparatus, the uniform welding teeth cannot make the tab portion form a solid plate shape melted into one, but present an insufficiently-welded plate shape of multiple layers of foils. Therefore, when the tab portion is welded with the terminal post through laser welding, cracks will appear on the edge of the formed laser weld, affecting the conductive yield rate and connection strength between the tab portion and the terminal post, and thus affecting the reliability of the battery cell.

For this reason, an example of the present application provides a battery cell, which includes a case, a terminal post, and an electrode assembly. The terminal post is arranged on the case. The electrode assembly includes an active material coating portion arranged in the case, and a tab portion connected to the active material coating portion and the terminal post. The tab portion includes multiple tab sheets, the multiple tab sheets are stacked and connected to form a gathered portion, the gathered portion has a first area and a second area, a compaction degree of the multiple tab sheets in the first area is greater than that in the second area, the gathered portion is connected to the terminal post to form a connecting portion, and at least part of an edge of the connecting portion on the gathered portion is located in the first area.

In this way, by configuring the multiple tab sheets to have a higher compaction degree in the first area than in the second area, and configuring at least part of the edge of the connecting portion on the gathered portion formed at the position of the gathered portion used for being electrically connected to the terminal post to be in the first area, at least part of the edge of the connecting portion is located in the relatively compacted area of the gathered portion, thus improving the problem that cracks appear on the edge of the connecting portion, improving the conductive yield rate and connection strength between the tab portion and the terminal post, and improving the reliability of the battery cell. In addition, by configuring the multiple tab sheets to have a lower compaction degree in the second area than in the first area, the multiple tab sheets are slightly insufficiently welded at interlayer in the second area. When welding to form the gathered portion and welding the gathered portion with the terminal post, the pulling stress at the connecting position between the first area and the second area can be reduced through the deformation of the tab sheets that are slightly insufficiently welded in the second area, thus improving the problem that the tab sheets crack at a junction between the first area and the second area. In addition, when welding the gathered portion with the terminal post, the pulling stress at the junction between the first area and the connecting portion can be reduced through the deformation of the tab sheets that are insufficiently welded in the second area, thus further reducing the problem that cracks appear on the edge of the connecting portion.

An example of the present application provides a power consuming apparatus using a battery as a power supply. The power consuming apparatus may be, but is not limited to, a mobile phone, a tablet, a laptop, an electric toy, an electric tool, an electric scooter, an electric vehicle, a ship, a spacecraft, or the like. The electric toy may include a fixed or mobile electric toy, such as a game console, an electric car toy, an electric ship toy, an electric airplane toy, or the like. The spacecraft may include an airplane, a rocket, a space shuttle, a spacecraft, or the like.

For the convenience of description, the following examples will be described by taking a power consuming apparatus according to an example of the present application being a vehicle 1000 as an example.

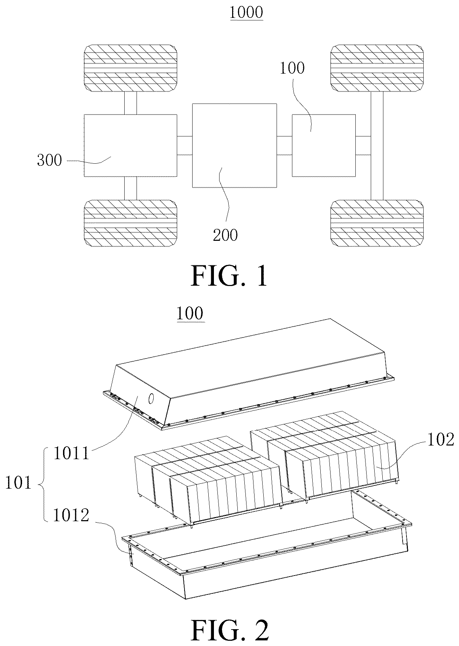

Refer to FIG. 1. FIG. 1 is a schematic structural diagram of a vehicle 1000 according to some examples of the present application. The vehicle 1000 may be a fuel powered vehicle, a gas powered vehicle, or a new energy vehicle. The new energy vehicle may be a pure electric vehicle, a hybrid electric vehicle, an extended range vehicle, or the like. The inside of the vehicle 1000 is provided with a battery 100. The battery 100 may be arranged at the bottom, head, or tail of the vehicle 1000. The battery 100 may be used for supplying power to the vehicle 1000. For example, the battery 100 may be used as a power supply for operating the vehicle 1000. The vehicle 1000 may further include a controller 200 and a motor 300. The controller 200 is used for controlling the battery 100 to supply power to the motor 300, for example, to meet working power requirements during starting, navigation, and traveling of the vehicle 1000.

In some examples of the present application, the battery 100 can not only serve as a power supply for operating the vehicle 1000, but can also serve as a power supply for driving the vehicle 1000, in place of or partially in place of fuel or natural gas, to provide driving power for the vehicle 1000.

Referring to FIG. 2, FIG. 2 is an exploded structural view of a battery 100 according to some examples of the present application. The battery 100 includes a box 101 and multiple battery cells 102. The battery cells 102 are accommodated in the box 101. The box 101 is used for providing an assembling space for the battery cells 102. The box 101 may be of a variety of structures. In some examples, the box 101 may include a first box body 1011 and a second box body 1012, the first box body 1011 and the second box body 1012 cover each other, and the first box body 1011 and the second box body 1012 jointly define the assembling space for accommodating the battery cells 102. The second box body 1012 may be a hollow structure with one side open. The first box body 1011 may be a plate-shaped structure. The first box body 1011 covers an open side of the second box body 1012, so that the first box body 1011 and the second box body 1012 jointly define the assembling space. Each of the first box body 1011 and the second box body 1012 may be a hollow structure with one side open. An open side of the first box body 1011 covers the open side of the second box body 1012. Of course, the box 101 formed by the first box body 1011 and the second box body 1012 may be in various shapes, such as cylindrical shape, cuboidal shape, and the like.

In the battery 100, the multiple battery cells 102 may be connected in series, parallel, or series-parallel. Series-parallel connection refers to that both series connection and parallel connection exist in the multiple battery cells 102. The multiple battery cells 102 may be directly connected in series, parallel, or series-parallel together, and then a whole formed by the multiple battery cells 102 is accommodated in the box 101. Of course, the battery 100 may also be a whole formed by firstly connecting the multiple battery cells 102 in series, parallel, or series-parallel to form a battery module form and then connecting the multiple battery modules in series, parallel, or series-parallel, and accommodated in the box 101. The battery 100 may further include other structures. For example, the battery 100 may further include a busbar component for achieving electrical connection between the multiple battery cells 102.

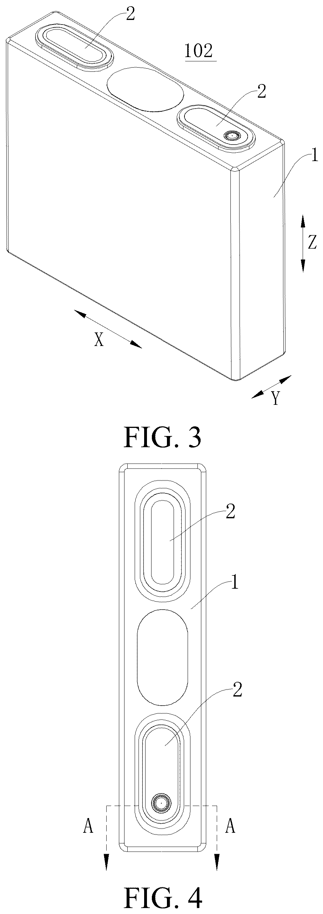

Each battery cell 102 may be a secondary battery or a primary battery, or may be, but not limited to, a lithium-sulfur battery, a sodium-ion battery, or a magnesium-ion battery. The battery cell 102 may be cylindrical, flat-shaped, cuboid-shaped, or the like. For example, referring to the example shown in FIG. 3, a length direction of the battery cell 102 is a first direction X, a width direction of the battery cell 102 is a second direction Y, and a height direction of battery cell 102 is a third direction Z. The first direction X, the second direction Y, and the third direction Z are perpendicular to each other.

In some examples of the present application, as shown in FIG. 4 to FIG. 6, the battery cell 102 includes a case 1, a terminal post 2, and an electrode assembly 7. The terminal post 2 is arranged on the case 1. The electrode assembly 7 includes an active material coating portion 71 arranged in the case 1, and a tab portion 72 connected to the active material coating portion 71. The tab portion 72 is electrically connected to the terminal post 2. "Electrically connected" includes direct or indirect connection to achieve electrical conductivity, that is, the tab portion 72 is directly or indirectly connected to the terminal post 2 to achieve electrical conductivity.

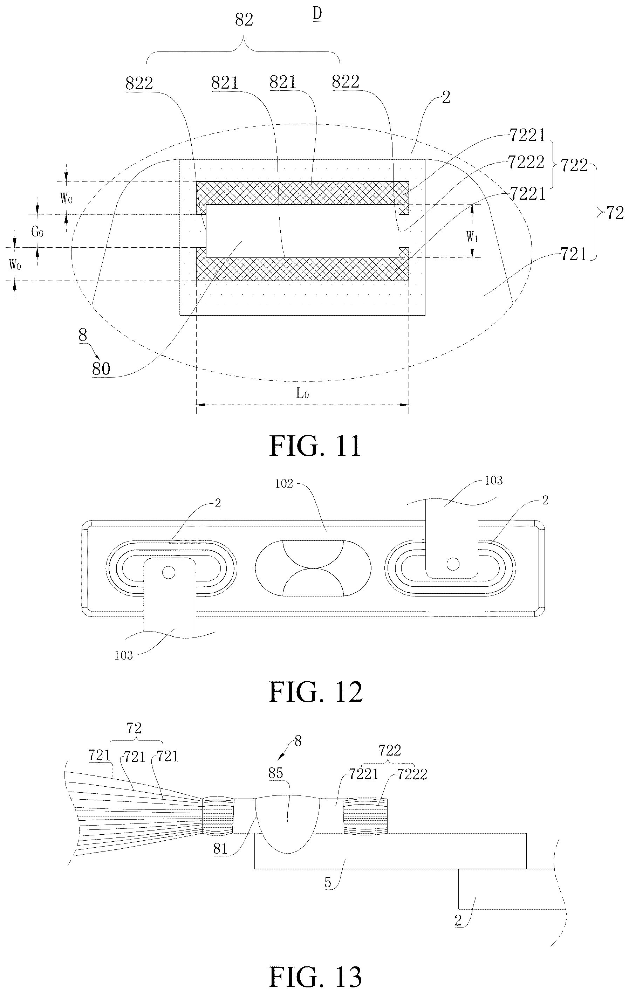

Exemplarily, an accommodating cavity 11 is formed in the case 1, the active material coating portion 71 is accommodated in the accommodating cavity 11, the terminal post 2 is arranged in the case 1 in a penetrating manner, the tab portion 72 is welded to the terminal post 2, and the tab portion 72 is directly electrically connected to the terminal post 2, so that the tab portion 72 is electrically connected between the active material coating portion 71 and the terminal post 2. Alternatively, the tab portion 72 may be indirectly connected to the terminal post 2 through an adapter sheet 5 (as shown in FIG. 13). For example, the tab portion 72 may be welded to one end of the adapter sheet 5, the other end of the adapter sheet 5 may be welded to the terminal post 2, and the tab portion 72 is indirectly electrically connected to the terminal post 2 through the adapter sheet 5.

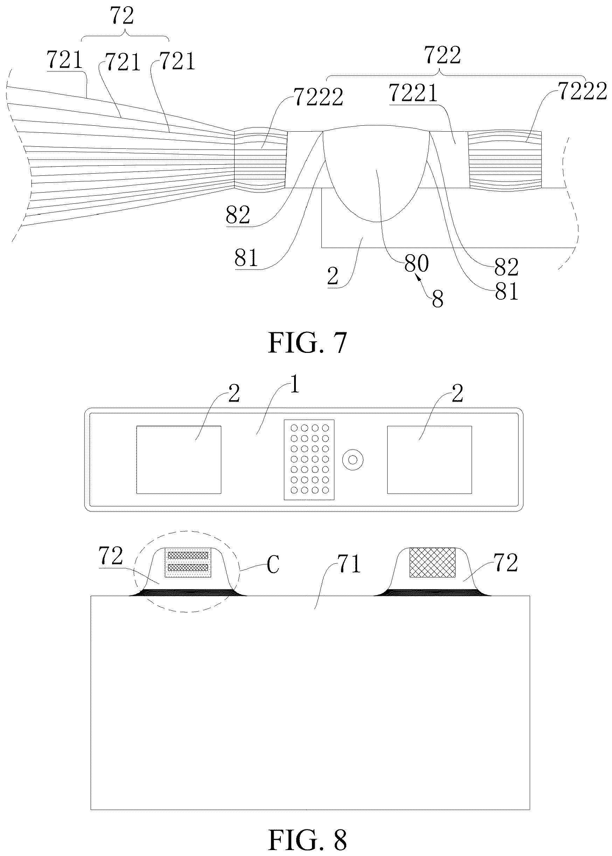

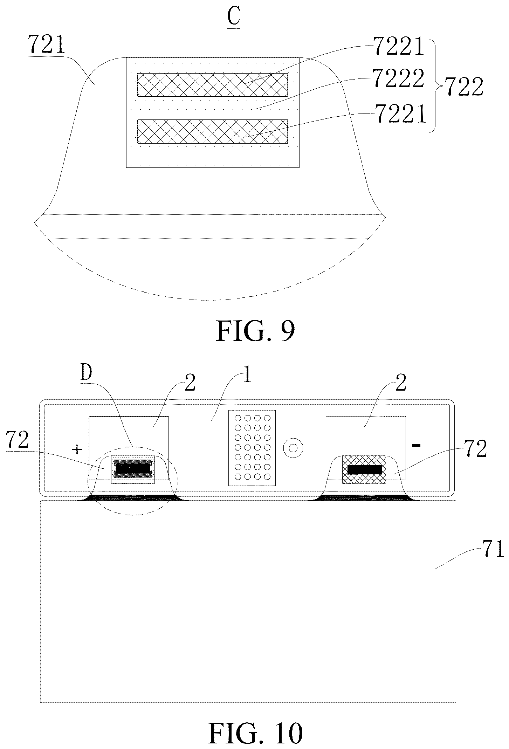

In combination with FIG. 7 to FIG. 9, the tab portion 72 includes multiple tab sheets 721, the multiple tab sheets 721 are stacked and connected to form a gathered portion 722, that is, the multiple tab sheets 721 in the gathered portion 722 not only exhibit a stacked arrangement, but also have a connection relationship, such as welding connection. The gathered portion 722 has a first area 7221 and a second area 7222. A compaction degree of the multiple tab sheets 721 in the first area 7221 is greater than that in the second area 7222, that is, the interlayer spacing of the multiple tab sheets 721 in the first area 7221 is smaller than that in the second area 7222. For example, the interlayer spacing in the first area 7221 may be zero, so as to achieve a better compaction effect. It is worth noting that the "compaction degree" referred to in the present application refers to the interlayer combination tightness of the multiple layers of tab sheets 721. The larger the interlayer spacing, the lower the compaction degree, and the smaller the interlayer spacing, the higher the compaction degree. The minimum interlayer spacing may be zero, that is, melting into one is achieved, at which point the compaction degree is maximum.

Exemplarily, since the first area 7221 and the second area 7222 are different in compaction degree, a thickness of the gathered portion 722 in the first area 7221 and the second area 7222 is different. The multiple tab sheets 721 have a higher compaction degree in the first area 7221 than in the second area 7222, and each tab sheet 721 is a generally structure with a uniform structure. Therefore, the thickness of the gathered portion 722 in the first area 7221 is smaller than that in the second area 7222, that is, the thickness of the gathered portion 722 in the first area 7221 is smaller than that in the second area 7222.

Exemplarily, the tab portion 72 forms the gathered portion 722 through ultrasonic welding. The first area 7221 is a deep welding area relative to the second area 7222, and the second area 7222 is a shallow welding area relative to the first area 7221. For example, the first area 7221 is formed as a solid plate-shaped compacted structure melted into one, and the second area 7222 is formed as a layered insufficiently-welded structure. It should be noted that when processing the multiple tab sheets 721 into a connected gathered portion 722, it is not limited to adopting ultrasonic welding. For example, other methods such as molecular diffusion welding and resistance welding may also be adopted.

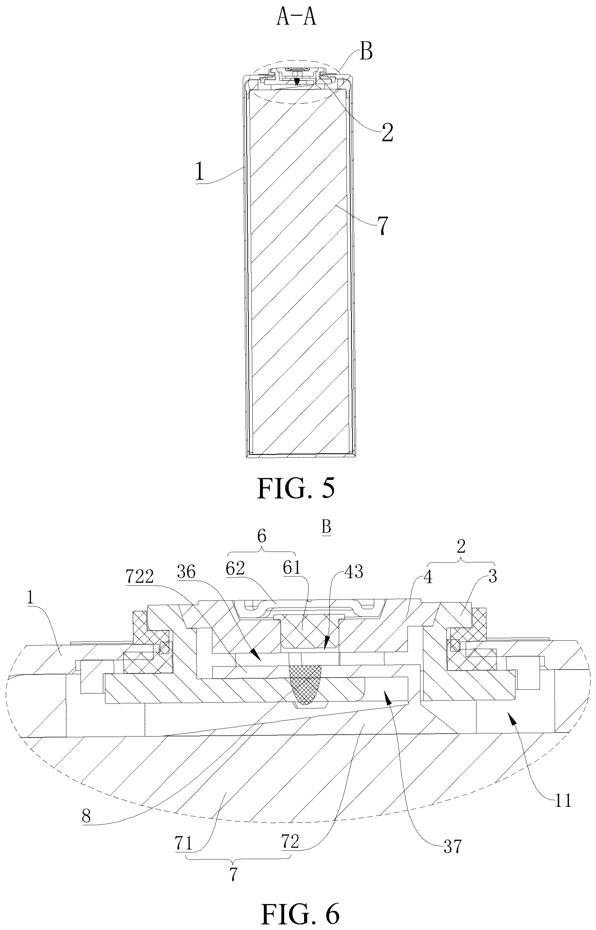

In combination with FIG. 6 and FIG. 7, as well as FIG. 10 and FIG. 11, a connecting portion 8 is formed at the position of the gathered portion 722 used for being electrically connected to the terminal post 2, and at least part of an edge 81 of the connecting portion 8 on the gathered portion 722 is located in the first area 7221.

Exemplarily, in combination with FIG. 6 and FIG. 7, the gathered portion 722 is directly welded to the terminal post 2 to form the connecting portion 8 jointly through the gathered portion 722 and the terminal post 2. For example, the connecting portion 8 is formed by the gathered portion 722 and the terminal post 2 through laser welding, the connecting portion 8 is a laser weld referred to as a first weld 80, an edge of the first weld 80 on the gathered portion 722 forms the edge 81 of the connecting portion 8 on the gathered portion 722, and at least part of the edge of the first weld 80 is located in the first area 7221. It should be noted that the connection between the gathered portion 722 and the terminal post 2 is not limited to laser welding. For example, it can also be replaced by other methods such as arc welding, plasma welding, gas welding, and electron beam welding. The first area 7221 is in a compacted state relative to the second area 7222, thus improving the problem that cracks appear on the edge of the first weld 80, improving the conductive yield rate and connection strength of the position of the tab portion 72 used for being electrically connected to the terminal post 2, and improving the reliability of the battery cell 102.

Exemplarily, in combination with FIG. 13, the gathered portion 722 is indirectly connected to the terminal posts 2 through the adapter sheet 5, and the gathered portion 722 is directly welded to the adapter sheet 5 to form the connecting portion 8 jointly through the gathered portion 722 and the adapter sheet 5. For example, the connecting portion 8 is formed by the gathered portion 722 and the adapter sheet 5 through laser welding, the connecting portion 8 is a laser weld referred to as a second weld 85, an edge of the second weld 85 on the gathered portion 722 forms the edge 81 of the connecting portion 8 on the gathered portion 722, and at least part of the edge of the second weld 85 is arranged in the first area 7221 of the gathered portion 722. It should be noted that the connection between the gathered portion 722 and the adapter sheet 5 is not limited to laser welding. For example, it can also be replaced by other methods such as arc welding, plasma welding, gas welding, and electron beam welding. The first area 7221 is in a compacted state relative to the second area 7222, thus improving the problem that cracks appear on the edge of the second weld 85, improving the conductive yield rate and connection strength of the tab portion 72 and the adapter sheet 5, and improving the reliability of the battery cell 102.

In this way, by configuring the multiple tab sheets 721 to have a higher compaction degree in the first area 7221 than in the second area 7222, and configuring at least part of the edge 81 of the connecting portion 8 on the gathered portion 722 formed at the position of the gathered portion 722 used for being electrically connected to the terminal post 2 to be in the first area 7221, at least part of the edge 81 of the connecting portion 8 is located in the relatively compacted area of the gathered portion 722, thus improving the problem that cracks appear on the edge 81 of the connecting portion 8, improving the conductive yield rate and connection strength of the position of the tab portion 72 used for being electrically connected to the terminal post 2, and improving the reliability of the battery cell 102.

In addition, by configuring the multiple tab sheets 721 to have a lower compaction degree in the second area 7222 than in the first area 7221, the multiple tab sheets 721 are slightly insufficiently welded in the second area 7222. When welding to form the gathered portion 722 and welding the gathered portion 722 with the terminal post 2 or the adapter sheet 5, the pulling stress at the connecting position between the first area 7221 and the second area 7222 can be reduced through the deformation of the tab sheets 721 that are slightly insufficiently welded in the second area 7222, thus improving the problem that the tab sheets 721 crack at a junction between the first area 7221 and the second area 7222. In addition, when welding the gathered portion 722 with the terminal post 2 or the adapter sheet 5, the pulling stress at the junction between the first area 7221 and the weld can be reduced through the deformation of the tab sheets 721 that are insufficiently welded in the second area 7222, thus further reducing the problem that cracks appear on the edge 81 of the connecting portion 8.

In addition, the gathered portion 722 formed by welding, such as ultrasonic welding, has a certain stiffness in both the first area 7221 and the second area 7222, thus facilitating the assembling of the tab portion 72. For example, in a case that the terminal post 2 has a communicating hole 37 and it is necessary to pass the tab portion 72 through the communicating hole 37 and then weld it to the terminal post 2, since the gathered portion 722 has a certain stiffness, it is convenient to pass the tab portion 72 through the communicating hole 37, thus improving the assembling efficiency of the tab portion 72 and reducing the assembling difficulty.

Specifically, when the interlayer spacing of the multiple layers of tab sheets 721 is large, there is a large air gap between the layers. When laser welding is performed with the terminal post 2 at this position, the welding heat of the laser welding is blocked by the large air gap, and the heat stays in the air gap for a long time, which easily burns out the tab sheets 721 and forms cracks. In this example of the present application, since the multiple layers of tab sheets 721 in the first area 7221 are fused into a relatively compacted structure with small or no interlayer spacing, the heat of the laser welding can be quickly conducted in the first area 7221, thus improving the problem that cracks are formed for a reason that the heat stays long at a certain position and burns through the tab sheets 721.

It is worth noting that in this example of the present application, the type of the terminal post 2 is not limited and it may be either a terminal post 2 of a negative electrode or a terminal post 2 of a positive electrode. Exemplarily, the tab portion 72 welded to the terminal post 2 of the negative electrode is a copper tab, and the tab portion 72 welded to the terminal post 2 of the positive electrode is an aluminum tab. Aluminum has the characteristics of large shrinkage and poor fluidity after heating, while copper has the characteristics of small shrinkage and good fluidity after heating. Therefore, after welding the tab portion 72 of the positive electrode to the terminal post 2 of the positive electrode, it is more likely to cause a cracking problem, and after welding the tab portion 72 of the negative electrode to the terminal post 2 of the negative electrode, it is less likely to cause a cracking problem.

In this way, at least the tab portion 72 of the positive electrode and the terminal post 2 of the positive electrode may adopt the improvement solution "the tab portion 72 includes multiple tab sheets 721, the multiple tab sheets 721 are stacked and connected to form a gathered portion 722, the gathered portion 722 has a first area 7221 and a second area 7222, a compaction degree of the multiple tab sheets 721 in the first area 7221 is greater than that in the second area 7222, the gathered portion 722 is connected to the terminal post 2 to form a connecting portion 8, and at least part of an edge 81 of the connecting portion 8 on the gathered portion 722 is located in the first area 7221" described above. However, the tab portion 72 of the negative electrode and the terminal post 2 of the negative electrode may adopt or may not adopt the improvement solution described above.

In some examples of the present application, the first area 7221 is an area with a highest compaction degree on the gathered portion 722. Specifically, the gathered portion 722 has multiple areas with different compaction degrees, where the area with the highest compaction degree, i.e., the area with the smallest interlayer spacing, such as the area with the smallest thickness of the gathered portion 722, is the first area 7221. In this way, at least part of the edge 81 of the connecting portion 8 on the gathered portion 722 formed at the position of the gathered portion 722 used for being electrically connected to the terminal post 2 is arranged in the first area 7221 with the highest compaction degree, thus more effectively improving the problem that cracks appear on the edge 81 of the connecting portion 8, more effectively improving the conductive yield rate and connection strength of the position of the tab portion 72 used for being electrically connected to the terminal post 2, and improving the reliability of the battery cell 102.

It is worth noting that the number of areas divided on the gathered portion 722 is not limited, and the areas with different compaction degrees are not limited to only the first area 7221 and the second area 7222. For example, there may be a third area, a fourth area. In a case that the first area 7221 is the area with the highest compaction degree, the compaction degree of the second area 7222 and the compaction degrees of other areas (such as the third area and the fourth area) except for the first area 7221 are not limited.

In some examples, the gathered portion 722 may be composed only of the first area 7221 and the second area 7222, but the number of the first area 7221 and the number of the second area 7222 are not limited, and may be respectively at least one, that is, the gathered portion 722 is composed of at least one first area 7221 and at least one second area 7222, thus simplifying the composition and processing of the gathered portion 722, reducing the processing difficulty of the gathered portion 722, and improving the processing quality of the gathered portion 722.

In some examples of the present application, in combination with FIG. 7 to FIG. 11, a part of the edge 81 of the connecting portion 8 on the gathered portion 722 is located in the second area 7222. That is to say, the edge 81 of the connecting portion 8 on the gathered portion 722 is not completely located in the first area 7221, one part of the edge 81 of the connecting portion 8 on the gathered portion 722 is located in the first area 7221, and the other part is located in the second area 7222. In this way, since the multiple tab sheets 721 have a lower compaction degree in the second area 7222 than in the first area 7221, the tab sheets 721 are relatively prone to deformation in the second area 7222. When welding the gathered portion 722 with the terminal post 2 or the adapter sheet 5 to form the connecting portion 8, since a part of the edge 81 of the connecting portion 8 on the gathered portion 722 is located in the second area 7222, the deformation of the tab sheets 721 in the second area 7222 can be bettered utilized, thus satisfying the welding shrinkage requirement, reducing the pulling stress on the edge 81 of the connecting portion 8, and further reducing the problem that cracks appear on the edge 81 of the connecting portion 8.

In some examples of the present application, in combination with FIG. 11, the part of the edge 81 of the connecting portion 8 on the surface of the gathered portion 722 is a contour line 82, the contour line 82 includes a first line segment 821 located in the first area 7221 and a second line segment 822 located in the second area 7222, and the length of the first line segment 821 is greater than the length of the second line segment 822. That is to say, since the part of the contour line 82 is more located in the first area 7221 than in the second area 7222, the part of the edge 81 of the connecting portion 8 is more located in the first area 7221 than in the second area 7222, thus significantly reducing the cracks on the edge 81 of the connecting portion 8, improving the conductive yield rate and connection strength of the position of the tab portion 72 used for being electrically connected to the terminal post 2, and improving the reliability of the battery cell 102.

In some examples of the present application, in combination with FIG. 11, multiple first areas 7221 are provided, adjacent first areas 7221 are spaced apart by the second area 7222, multiple first line segments 821 are provided and spaced apart, the multiple first line segments 821 are respectively and correspondingly located in the multiple first areas 7221, that is, a first line segment 821 is located in each first area 7221, and adjacent first line segments 821 are connected by the second line segments 822. In this way, the tab sheets 721 spaced apart in the second area 7222 between adjacent first areas 7221 can more fully exert the deformation effect, thus satisfying the welding shrinkage requirement, further reducing the pulling stress on the edge 81 of the connecting portion 8, significantly reducing the cracks on the edge 81 of the connecting portion 8, improving the conductive yield rate and connection strength of the position of the tab portion 72 used for being electrically connected to the terminal post 2, and improving the reliability of the battery cell 102.

In some examples of the present application, in combination with FIG. 11, the contour line 82 is long ring-shaped, that is, the contour line 82 is ring-shaped and the length of the contour line 82 is greater than the width. For example, it is rectangular, elliptical, runwayshaped. Two first areas 7221 are provided and spaced apart along a width direction of the contour line 82, the first areas 7221 are formed as long strip-shaped areas extending along a length direction of the contour line 82, that is, the length direction of the first areas 7221 extends along the length direction of the contour line 82, and two long sides of the contour line 82 are respectively and correspondingly located in the two first areas 7221, so that the long sides of the contour line 82 form at least part of the first line segments 821, and at least part of the short sides of the contour line 82 forms the second line segments 822.

In this way, the structure and shape of the connecting portion 8 are simple, thus facilitating formation through laser welding and the like. Moreover, by configuring the number and distribution positions of the first areas 7221 in this way, the space of the accommodating portion can be fully utilized, so that on the premise of satisfying the formation of the strip-shaped connecting portion 8, the first line segments 821 are longer than the second line segments 822, the part of the edge 81 of the connecting portion 8 that is located between the two first areas 7221 can be more easily deformed to meet the welding shrinkage requirement, the part of the edge 81 of the connecting portion 8 that is located in the first areas 7221 is larger, and the area that cracks are not easily formed is larger, thus significantly improving the conductive yield rate and connection strength of the position of the tab portion 72 used for being electrically connected to the terminal post 2, and improving the reliability of the battery cell 102.

Exemplarily, as shown in FIG. 11, the two first areas 7221 are arranged in parallel and symmetrically. In this way, the space of the gathered portion 722 can be fully utilized to increase the area and coverage of the first areas 7221 and facilitate the separation of the two second areas 7222 through the second area 7222, thus facilitating the processing of the first areas 7221 and the second area 7222, and reducing the processing difficulty of the gathered portion 722. Moreover, when welding the tab portions 72 and the gathered portion 722, since the two first areas 7221 are arranged in parallel and symmetrically, the ultrasonic welding head 400 can weld along the length direction of the first areas 7221 between the two first areas 7221, so that the edges of the two sides of the width of the weld can very easily be located in the first areas 7221 on the two sides, thus reducing the welding difficulty and improving the welding efficiency.

In some examples of the present application, as shown in FIG. 11, the width direction of the contour line 82 is longitudinal, the longitudinal spacing between the two first areas 7221 is $G_0$, the longitudinal width of the first areas 7221 is $W_0$, the connecting portion 8 is a weld (such as the first weld 80 or the second weld 85) and the maximum longitudinal weld width is $W_1$, a standard deviation of the maximum longitudinal weld width is $[\sigma]$, the longitudinal fluctuation value of the assembling of the gathered portion 722 is $\omega$ (such as the longitudinal fluctuation value produced in the assembling between the gathered portion 722 and the terminal post 2 or the adapter sheet 5), and, for example, $\omega$ may be about 1 mm, where $W_1-3[\sigma]-\omega \geq G_0$, and $W_1+3[\sigma]+\omega \leq G_0+2W_0$. In this way, the edges of the two sides of the width of the weld can be enabled to be reliably located in the first areas 7221, thus effectively reducing cracks on the edge 81 of the connecting portion 8, improving the conductive yield rate and connection strength of the position of the tab portion 72 used for being electrically connected to the terminal post 2, and improving the reliability of the battery cell 102. The standard deviation is a mathematical term that refers to the arithmetic square root of the arithmetic mean (i.e., variance) of the square of the deviation from the mean, expressed as $[\sigma]$. The standard deviation, also known as the standard error or the experimental standard deviation, is most commonly used in probability statistics as a measure of the degree of statistical distribution. According to the customary design in engineering, a fluctuation of three times the standard deviation $[\sigma]$ is taken.

In some examples of the present application, the tab portion 72 forms the gathered portion 722 through ultrasonic welding. A total area of all the first areas 7221 is S and less than or equal to a critical area $S_0$, where $S_0 = P \times (\pi \times D^2 \times \gamma \div 4) \div ([\sigma_{0.2}] \times \varphi)$, P is a pressure of compressed air inputted to an ultrasonic welding apparatus, and D is a cylinder diameter of the ultrasonic welding apparatus. The pressure of compressed air inputted to the ultrasonic welding apparatus and the cylinder diameter of the ultrasonic welding apparatus may be clearly defined after the specific type of the ultrasonic welding apparatus is selected, $\gamma$ is a proportion of pressure applied in the first areas 7221, i.e., the proportion of the pressure applied in the first areas 7221 to the total pressure inputted by the ultrasonic welding apparatus 2000 during ultrasonic welding, $[\sigma_{0.2}]$ is a yield strength of the tab sheets 721, which may be about 80%, and φ is a residual strength coefficient of the tab sheets 721 under an action of welding heat, which may be about 40%. The yield strength $[\sigma_{0.2}]$ of the tab sheets 721 is the strength at which 0.2% yield occurs, which may be measured experimentally. For example, after the material type of the tab sheets 721 is determined, it may be tested by designing samples according to the "Tensile Testing of Metal Materials" (GB/T 228.1-2010, GB/T 228.2-2015) (refer to GB/T 228.1-2010 Tensile Testing of Metal Materials Part 1: Room Temperature Test Method [S], Beijing: China Standard Press, 2011: 6-15; GB/T 228.2-2015 Tensile Testing of Metallic Materials Part 2: High Temperature Test Method [S]. Beijing: China Standard Press, 2015: 3-8).

For example, as shown in FIG. 11, the first area 7221 is rectangular and has an area equal to the product of the length and width of the first area 7221. If the length of the first area 7221 is $L_0$ and the width is $W_0$, the area of the first area 7221 is $L_0 \times W_0$, and the total area of the two first areas 7221 is $S = 2L_0 \times W_0$. In this way, it can meet the requirement that the pressure in the first areas 7221 during ultrasonic pre-welding is greater than or equal to the yield strength of the tab sheets 721 under the softening action of welding heat, so that the tab sheets 721 can undergo plastic deformation well, and the first areas 7221 can achieve a more effective compaction effect.

In some examples of the present application, as shown in FIG. 6, the terminal post 2 includes a terminal post body 3 mounted to the case 1, an accommodating groove 36 is formed on the terminal post body 3, and at least part of the gathered portion 722 is accommodated in the accommodating groove 36. In this way, at least part of the gathered portion 722 is accommodated in the accommodating groove 36, so that at least part of the gathered portion 722 occupies the space in the accommodating groove 36, thus reducing the space occupied by the gathered portion 722 in the case 1, saving the space in the case 1 to accommodate a larger volume of active material coating portion 71, and helping to improve the energy density of the battery cell 102, or helping to reduce the size of the battery cell 102 without changing the energy density of the battery cell 102.

In some examples of the present application, as shown in FIG. 5 and FIG. 6, an accommodating cavity 11 is formed in the case 1, the accommodating groove 36 is open towards a direction away from the accommodating cavity 11, the terminal post body 3 is provided with a communicating hole 37, the communicating hole 37 runs through a sidewall of the accommodating groove 36 close to the accommodating cavity 11 and communicates the accommodating cavity 11 with the accommodating groove 36, and the gathered portion 722 is arranged in the communicating hole 37 in a penetrating manner. In this way, when filling an electrolyte into the battery cell 102, the electrolyte can be filled into the accommodating groove 36 and then flow towards the accommodating cavity 11 through the communicating hole 37. The accommodating groove 36 can play a role of buffering the electrolyte, so as to improve problems such as electrolyte splashing and overflow. Moreover, the sidewall of the accommodating groove 36 (i.e., a groove wall extending towards a direction from a mouth of the accommodating groove 36 to the accommodating cavity 11) can to some extent prevent the electrolyte from splashing, reduce the pollution caused by the electrolyte to the outside, and facilitate rapid filling. Besides, since there is no need to separately open an electrolyte filling channel in the case 1, no special processing is required for the case 1, thus helping to reduce the structural complexity and processing difficulty of the case 1.

It is worth noting that one or more communicating holes 37 may be provided, and the gathered portion 722 may be arranged in at least one of the communicating holes 37 in a penetrating manner. Exemplarily, at least one communicating hole 37 can allow the electrolyte to pass through. For example, at least one communicating hole 37 is vacant (that is, no gathered portion 722 is arranged in a penetrating manner), so that the electrolyte can pass through without being obstructed by the gathered portion 722. For another example, at least one communicating hole 37 can still allow the electrolyte to pass through after the gathered portion 722 is arranged in a penetrating manner.

In some examples, the gathered portion 722 is welded to the terminal post body 3 to form an electrical connection, thus achieving electrode output of the electrode assembly 7 from the terminal post body 3. Exemplarily, as shown in FIG. 6, when the accommodating groove 36 opens in a direction away from the accommodating cavity 11, the gathered portion 722 is welded with the one sidewall of the accommodating groove 36 close to the accommodating cavity 11, thus improving the assembling compactness and facilitating the welding operation between the two. Of course, the present application is not limited to this. In other examples, the gathered portion 722 may also be arranged to be welded to the terminal post cover plate 4 described later to form an electrical connection, which is not limited here.

In some examples of the present application, as shown in FIG. 6, the terminal post 2 includes a terminal post cover plate 4 covering the terminal post body 3, an electrolyte filling hole 43 communicated with the accommodating groove 36 is formed in the terminal post cover plate 4, and the battery cell 102 further includes a sealing structure 6 used for sealing the electrolyte filling hole 43. In this way, when it is required to fill the electrolyte into the battery cell 102, the sealing structure 6 is not mounted to the electrolyte filling hole 43 first, or the sealing structure 6 is in a state of opening the electrolyte filling hole 43, and at this time, the electrolyte may be filled into the accommodating groove 36 through the electrolyte filling hole 43. In addition, after the electrolyte is filled, the sealing structure 6 may be mounted to the electrolyte filling hole 43, or the sealing structure 6 may be switched to a state of closing the electrolyte filling hole 43, thus sealing and closing the electrolyte filling hole 43 to prevent electrolyte overflow and prevent external foreign objects from entering the accommodating cavity 11 from the electrolyte filling hole 43, thus improving the reliability of the battery cell 102. In this way, by forming the electrolyte filling hole 43 in the terminal post cover plate 4, the opening is relatively small and located outwards, thus easily achieving the reliable sealing of the electrolyte filling inlet through the sealing structure 6, improving the working reliability of the battery cell 102, and achieving the flexible and diversified design of the sealing structure 6.

In some examples, as shown in FIG. 6, the terminal post cover plate 4 does not have a portion that stops on the outside of the sealing structure 6 (i.e., the side away from the accommodating cavity 11), so that the sealing structure 6 is suitable for being mounted from the outer side of the terminal post cover plate 4 (i.e., the side away from the accommodating cavity 11) to the terminal post cover plate 4. In this way, by configuring the sealing structure 6 to be mounted from the outer side of the terminal post cover plate 4 to the terminal post cover plate 4 to seal the electrolyte filling hole 43, the sealing structure 6 can be mounted after the electrolyte is filled, thus ensuring the sealing performance of the electrolyte filling hole 43. In addition, since the mounting position is close to the outer side, it facilitates the quick assembling of the sealing structure 6. Moreover, the mounting of the sealing structure 6 will not have any adverse effects on the connection between the terminal post body 3 and the terminal post cover plate 4, thus ensuring the reliability of the connection between the terminal post cover plate 4 and the terminal post body 3.

The sealing structure 6 may be in a detachable form or a non-detachable fixed form. Exemplarily, in a case that the sealing structure 6 is in a detachable form, it facilitates the maintenance of the electrolyte filling hole 43. For example, when the electrolyte needs to be replenished, the sealing structure 6 may be removed, the electrolyte filling hole 43 is opened, and the electrolyte is filled into the accommodating cavity 11 through the electrolyte filling hole 43. Then, the sealing structure 6 is mounted back, for example, by using threads or turnbuckles to detachably connect the sealing structure 6 to the terminal post cover plate 4, thus facilitating the disassembling and assembling.

Exemplarily, in a case that the sealing structure 6 is in a non-detachable fixed form, welding, riveting, and other methods may be adopted to fix the sealing structure 6 to the terminal post cover plate 4, thus improving the sealing reliability of the sealing structure 6 to the electrolyte filling hole 43. For example, in combination with FIG. 6, the electrolyte filling hole 43 may be in a multi-segment form, and the sealing structure 6 may include a first sealing member 61 in clearance fit with the electrolyte filling hole 43, and a second sealing member 62 covering the first sealing member 61 and welded to the terminal post cover plate 4. Alternatively, in some examples, the second sealing member 62 may be configured to be detachably connected to the terminal post cover plate 4 through turnbuckles to restrict the first sealing member 61 to the position of interference fit with the electrolyte filling hole 43.

In some examples of the present application, as shown in FIG. 6, at least part of the sealing structure 6 is embedded into the electrolyte filling hole 43. That is, the sealing structure 6 may be fully embedded into the electrolyte filling hole 43, or only a part of the sealing structure 6 may be embedded into the electrolyte filling hole 43. In this way, on the one hand, the space inside the electrolyte filling hole 43 can be fully utilized to improve the sealing reliability of the sealing structure 6 to the electrolyte filling hole 43. On the other hand, the height of the sealing structure 6 protruding outside the electrolyte filling hole 43 can be reduced and the space outside the terminal post cover plate 4 occupied by the sealing structure 6 can be reduced, thus helping to reduce the interference effect on the busbar component 103, increase the connection area between the busbar component 103 and the terminal post cover plate 4, and improve the overcurrent efficiency.

It is worth noting that the arrangement position of the terminal post 2 on the case 1 is not limited. For example, the case 1 may include a case body and a cover plate. The case body defines a space with one side open, and the cover plate is arranged on the open side of the case body to form the accommodating cavity 11 between the case body and the cover plate. At this time, a side surface of the case body opposite to the cover plate is a first case wall, and a wall surface of the case body connected between the first case wall and the cover plate is a second case wall. At this time, the terminal post 2 may be arranged on the first case wall, the second case wall, or the cover plate. In addition, it should be noted that the terminal post 2 of the positive electrode and the terminal post 2 of the negative electrode may be located on the same side surface of the case 1, or on different side surfaces of the case 1. For example, the terminal post 2 of the positive electrode and the terminal post 2 of the negative electrode may be simultaneously arranged on the cover plate, or the terminal post 2 of the positive electrode and the terminal post 2 of the negative electrode may be simultaneously arranged on the first case wall, or one of the terminal post 2 of the positive electrode and the terminal post 2 of the negative electrode may be arranged on the cover plate and the other is arranged on the first case wall.

An example of the present application further provides a battery 100, which includes the battery cell 102 according to any solution described above. It is worth noting that the battery 100 according to this example of the present application may or may not include a box. In this way, since the reliability of the battery cell 102 according to the example of the present application is improved, the performance of the battery 100 is improved.

Exemplarily, as shown in FIG. 12, the battery 100 may further include a busbar component 103, multiple battery cells 102 are provided, and at least two of the battery cells are electrically connected through the busbar component 103. In this way, the series and/or parallel connection of the multiple battery cells 102 can be achieved. For example, in a case that the multiple battery cells 102 are connected in series, the terminal post cover plate 4 of the positive electrode of one battery cell 102 is connected to the terminal post cover plate 4 of the negative electrode of a next battery cell 102 through a busbar component 103, while the terminal post cover plate 4 of the negative electrode of the battery cell 102 is connected to the terminal post cover plate 4 of the negative electrode of a previous battery cell 102 through another busbar component 103.

An example of the present application further provides a power consuming apparatus, which includes the battery 100 according to any solution described above. The battery 100 is used for supplying power to the power consuming apparatus. The power consuming apparatus may be any one of the above devices or systems that apply the battery 100. Since the performance of the battery 100 is improved, the working power performance of the power consuming apparatus is improved.

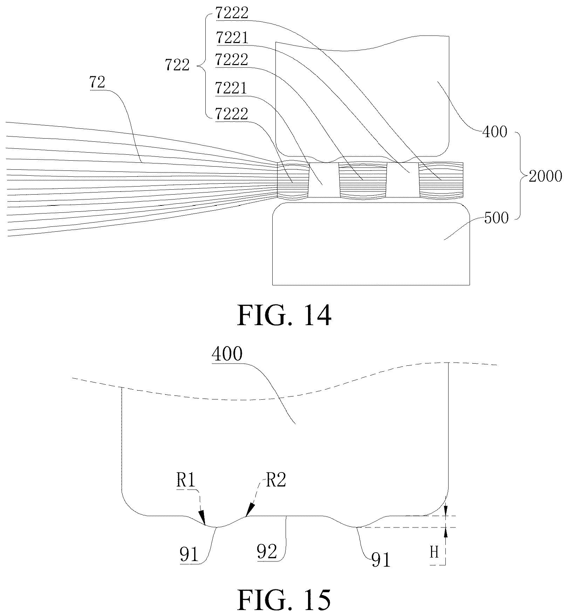

As shown in FIG. 14 to FIG. 17, an example of the present application further provides an ultrasonic welding head 400 used for processing the gathered portion 722 of the tab portion 72 according to any example of the present application described above. A welding surface (denoted as a first welding surface 9) of the ultrasonic welding head 400 includes a first surface portion 91 and a second surface portion 92. The first surface portion 91 protrudes from the second surface portion 92. The first surface portion 91 is used for correspondingly processing the first area 7221. The second surface portion 92 is used for correspondingly processing the second area 7222. In this way, in the ultrasonic welding head 400 according to this example of the present application, by configuring the first welding surface 9 to include a first surface portion 91 and a second surface portion 92, with the first surface portion 91 protruding from the second surface portion 92, since the first surface portion 91 protrudes from the second surface portion 92, during the ultrasonic pre-welding of the tab portion 72, the first surface portion 91 contacts the tab sheets 721 earlier than the second surface portion 92, the second surface portion 92 contacts the tab sheets 721 later than the first surface portion 91, the pre-welding force tends to concentrate on the part of the tab portion 72 in contact with the first surface portion 91, so that the compaction degree of the first area 7221 of the tab portion 72 opposite to the first surface portion 91 is relatively higher, thus making the compaction degree of the first area 7221 processed by the first surface portion 91 higher than the compaction degree of the second area 7222 processed by the second surface portion 92.

Specifically, in the ultrasonic welding head 400 according to this example of the present application, by arranging a protruding first surface portion 91 at the position of the first area 7221 of the corresponding tab portion 72 used for being welded with the terminal post 2 or the adapter sheet 5, during the ultrasonic pre-welding of the gathered portion 722, since the first surface portion 91 protrudes and the area is smaller than the total area of the first welding surface 9, the first surface portion 91 contacts the tab sheets 721 first and the pressure area is smaller, thus increasing the local pressure. Without changing the pre-welding pressure and energy, the pre-welding force is concentrated at the position of the first area 7221, thus forming the first area 7221 with a higher compaction degree, and making the first area 7221 close to or become a solid plate structure.

Exemplarily, the original pressure is only 8 MPa, so that the tab sheets only undergo elastic deformation. After the ultrasonic welding head is removed, the air gap between the tab sheets is restored, and only a few welding points are compacted. However, according to some examples of the present application, based on the pressure formula P=F/S, under the condition of unchanging the pre-welding pressure but reducing the area, the pressure can be increased, so that the pressure at the first surface portion 91 can be increased to about 30 MPa, and the tab sheets 721 may undergo plastic deformation. After the ultrasonic welding head 400 is removed, there will be basically no rebound, thus forming a solid plate structure with a higher compaction degree.

In some examples, as shown in FIG. 15, the first surface portion 91 is a protruding curved surface. For example, the first surface portion 91 is neither a flat surface nor a sharp folded surface. In this way, compared to the flat surface, the protruding curved surface can further reduce the priority contact area, further increase the local pressure, and thus improve the compaction degree by pre-welding; and compared to the sharp folded surface, it can avoid the problem that the tab sheets 721 are pressed cracked due to the sharp contact between the first surface portion 91 and the tab sheets 721. In short, it can protect the tab sheets 721, improve the welding yield rate, and address the problems such as cracks at the pre-welding position on the premise of increasing the compaction degree of the tab sheets 721 through the first surface portion 91.

In some examples, as shown in FIG. 15, a cross section of the first surface portion 91 is arc-shaped and has a radius R1 ranging from 0.2 mm to 0.5 mm, that is, a section obtained by cutting the first surface portion 91 through a plane perpendicular to the length direction of the first surface portion 91 is the cross section. For example, the radius R1 may be 0.2 mm, 0.25 mm, 0.3 mm, 0.35 mm, 0.4 mm, 0.45 mm, 0.5 mm, or the like. In this way, since the radius of the first surface portion 91 is not too large, the first surface portion 91 can have a certain protrusion height under a certain width; and since the radius of the first surface portion 91 is not too small, the first surface portion 91 can have a certain width under a certain protrusion height, so that the width and protrusion height of the first surface portion 91 can enable the first area 7221 to obtain a larger pre-welding pressure, thus achieving a better deep welding compaction effect, and making the second area 7222 achieve a shallow welding effect to have a certain stiffness.

In some examples, as shown in FIG. 15, the first surface portion 91 and the second surface portion 92 are connected at a connecting position through curved-surface smooth transition. In this way, during the process of pre-welding the tab portion 72 through the ultrasonic welding head 400, when the first welding surface 9 is in contact with the tab portion 72 and subjected to reaction, since the first surface portion 91 and the second surface portion 92 are connected at the connecting position through curved-surface smooth transition, the situation that the first welding surface 9 is cracked at the junction between the first surface portion 91 and the second surface portion 92 due to stress concentration at the connecting position between the first surface portion 91 and the second surface portion 92 can be reduced, thus improving the tab portion 72 pre-welding reliability of the ultrasonic welding head 400 and facilitating the extension of the service life of the ultrasonic welding head 400. Therefore, for the ultrasonic welding head 400 according to this example of the present application, the structural reliability of the first welding surface 9 can be improved, and the structural stability of the ultrasonic welding head 400 during the process of pre-welding the tab portion 72 can be improved, thus improving the tab portion 72 pre-welding reliability of the ultrasonic welding head 400 and facilitating the extension of the service life of the ultrasonic welding head 400. For example, in some examples, the first surface portion 91 and the second surface portion 92 are connected at the connecting position through arc-surface smooth transition, and the radius R2 of an arc surface may also range from 0.2 mm to 0.5 mm, and for example, may be 0.2 mm, 0.25 mm, 0.3 mm, 0.35 mm, 0.4 mm, 0.45 mm, 0.5 mm, thus improving the smoothness of the transition connection.

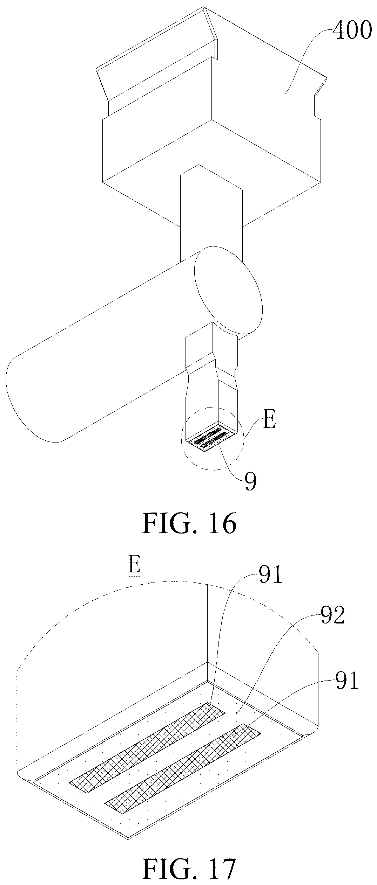

In some examples, as shown in FIG. 16 and FIG. 17, the first surface portion 91 is long strip-shaped and two first surface portions 91 are provided and arranged in parallel. In this way, first areas 7221 which are long strip-shaped can be processed, two first areas 7221 are provided and arranged in parallel. In this way, when welding the gathered portion 722 with the terminal post 2 or the adapter sheet 5, the weld can extend along the length direction of the first areas 7221, and the edges of the two sides of the width of the weld can be respectively located in the first areas 7221 on the two sides, so that most of the edge 81 of the connecting portion 8 is less likely to crack. Moreover, the parts of the tab sheets 721 in the second area 7222 between the two first areas 7221 can be easily deformed, thus meeting the welding shrinkage requirement and improving the problem of cracks caused by stress pulling on the edges of the two sides of the width of the weld. Moreover, the space of the gathered portion 722 can be fully utilized to increase the area and coverage of the first areas 7221 and increase the length of the weld, thus improving the reliability of the connection between the tab portion 72 and the terminal post 2 or adapter sheet 5, facilitating the processing of the first areas 7221 and the second area 7222, and reducing the processing difficulty of the gathered portion 722.

In some examples, as shown in FIG. 15, the protrusion height of the first surface portion 91 relative to the second surface portion 92 ranges from 0.05 mm to 0.2 mm. For example, it may be 0.05 mm, 0.1 mm, 0.15 mm, or 0.2 mm. In this way, the protrusion height of the first surface portion 91 is not too small, so that the first areas 7221 can obtain a larger pre-welding pressure, thus achieving a better deep welding compaction effect, and the protrusion height of the first surface portion 91 is not too large, so that the second area 7222 can also obtain a pre-welding pressure, thus achieving a shallow welding effect and achieving certain stiffness.

It should be noted that the shapes of the first surface portion 91 and the second surface portion 92 are not limited. For example, the first surface portion 91 may be a diamondshaped mesh surface or an electric spark corrosion frosted surface, thus achieving a good deep welding effect; and the second surface portion 92 may be an electric spark corrosion frosted surface or the like, thus achieving a good shallow welding effect.

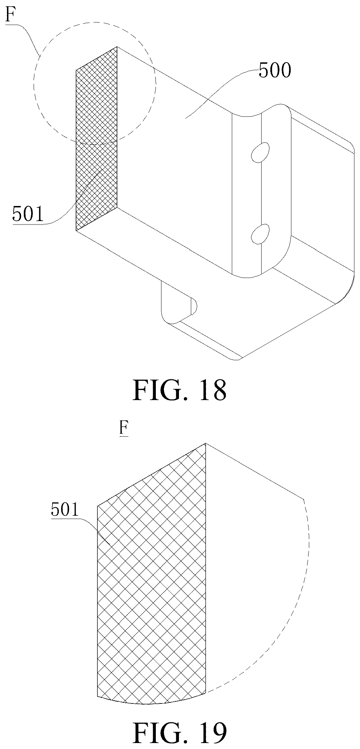

As shown in FIG. 14 to FIG. 19, an example of the present application further provides an ultrasonic welding apparatus 2000, which includes a welding seat 500 and the ultrasonic welding head 400 according to any example of the present application described above. When welding, a part of the tab portion 72 may be placed on the welding seat 500, and the ultrasonic welding head 400 is lowered to sandwich the stacked tab sheets 721 between the welding seat 500 and the ultrasonic welding head 400. The ultrasonic welding head 400 can achieve the ultrasonic pre-welding of the tab portion 72.

In the above technical solution, since the ultrasonic welding apparatus 2000 includes the ultrasonic welding head 400 according to any solution described above, it helps to process the tab portion 72 with the first area 7221 and the second area 7222, thus helping to improve the problem of cracks on the edge of the connecting portion 8 between the tab portion 72 and the terminal post 2, improving the conductive yield rate and connection strength of the position of the tab portion 72 used for being electrically connected to the terminal post 2, and improving the reliability of the battery cell 102.

It is worth noting that a welding surface (denoted as a second welding surface 501) of the welding seat 500 is not limited. For example, in some examples, the second welding surface 501 may be configured to have a shape similar to or consistent with the shape of the first welding surface 9. For example, the second welding surface 501 may include a third surface portion and a fourth surface portion, the third surface portion protrudes from the fourth surface portion, the third surface portion is opposite to the first surface portion 91, and the fourth surface portion is opposite to the second surface 92, so that the first area 7221 can achieve a better and higher-degree compaction effect than the second area 7222. For example, in other examples, the second welding surface 501 may be configured to have a common uniform welding tooth shape. For example, the second welding surface 501 is a diamondshaped mesh surface or an electric spark corrosion frosted surface as a whole, thus reducing the production cost.

Below, the ultrasonic welding head 400 according to a specific example of the present application will be described.

The welding surface of the ultrasonic welding head 400 is provided with a protrusion at the position of the edge 81 of the connecting portion 8 formed by welding the corresponding tab portion 72 and the terminal post 2, so that when the tab portion 72 is welded through ultrasonic welding to form the gathered portion 722, the pre-welding force and energy can be concentrated at a local position opposite to the protrusion, a deep welding area with a higher compaction degree (i.e., the first area 7221) is formed, and the gathered portion 722 is formed as a solid plate structure in the deep welding area. At the same time, the non-protruding position of the welding head contacts the tab sheets 721 later during ultrasonic welding, the pre-welding force is relatively small, a shallow welding area with a lower compaction degree (i.e. the second area 7222) is formed, and the gathered portion 722 is formed as an insufficiently-welded layered structure in the shallow welding area, thus reducing the stress of ultrasonic pre-welding through the shallow welding area, and improving the problem that the tab sheets 721 are pulled cracked. Subsequently, when adopting laser welding to weld the gathered portion 722 with the terminal post 2, at least part of the edge 81 of the connecting portion 8 is located in the deep welding area, thus effectively improving the problem that cracks appear on the edge 81 of the connecting portion 8. In addition, when assembling the tab portion 72 with the terminal post 2, since the shallow welding area of the tab portion 72 has a certain stiffness, the tab portion 72 can be conveniently assembled to the terminal post 2 in a penetrating manner.

It should be noted that without conflict, the examples and features in the examples of the present application may be freely combined with each other.

What are described above are just preferred examples of the present application and are not intended to limit the present application. For those skilled in the art, the present application may have various modifications and variations. Any modification, equivalent replacement, improvement, and the like made within the spirit and principle of the present application should be included in the scope of protection of the present application.

**Claims**

1. A battery cell, comprising:

    a case;
    a terminal post, arranged on the case; and
    an electrode assembly, comprising an active material coating portion arranged in the case, and a tab portion electrically connected to the active material coating portion and the terminal post, wherein the tab portion comprises a plurality of tab sheets, the plurality of tab sheets are stacked and connected to form a gathered portion, the gathered portion has a first area and a second area, a compaction degree of the plurality of tab sheets in the first area is greater than that in the second area, a connecting portion is formed at a position of the gathered portion used for being electrically connected to the terminal post, and at least part of an edge of the connecting portion on the gathered portion is located in the first area.

2. The battery cell according to claim 1, wherein a part of the edge of the connecting portion on the gathered portion is located in the second area.

3. The battery cell according to claim 2, wherein the part of the edge of the connecting portion on a surface of the gathered portion is a contour line, the contour line comprises a first line segment located in the first area and a second line segment located in the second area, and a length of the first line segment is greater than a length of the second line segment.

4. The battery cell according to claim 3, wherein a plurality of first areas are provided, adjacent first areas are spaced apart by the second area, a plurality of first line segments are provided and spaced apart, the plurality of first line segments are respectively and correspondingly located in the plurality of first areas, and adjacent first line segments are connected by the second line segments.

5. The battery cell according to claim 4, wherein the contour line is long ring-shaped, two first areas are provided and spaced apart along a width direction of the contour line, the first areas are formed as long strip-shaped areas extending along a length direction of the contour line, and two long sides of the contour line are respectively and correspondingly located in the two first areas.

6. The battery cell according to claim 5, wherein the width direction of the contour line is longitudinal, a longitudinal spacing between the two first areas is $G_0$, a longitudinal width of the first areas is $W_0$, the connecting portion is a weld and a maximum long-

itudinal weld width is $W_1$, a standard deviation of the maximum longitudinal weld width is $[\sigma]$, and a longitudinal fluctuation value of a assembling of the gathered portion is $\omega$, wherein $W_1\text{-}3[\sigma]\text{-}\omega\geq G_0$, and

$$W_1+3[\sigma]+\omega\leq G_0+2W_0.$$

7. The battery cell according to any one of claims 1 to 6, wherein the two first areas are arranged in parallel and symmetrically.

8. The battery cell according to any one of claims 1 to 7, wherein the tab portion forms the gathered portion through ultrasonic welding, and a total area of all the first areas is S and less than or equal to a critical area $S_0$, wherein $S_0=P\times(\pi\times D^2\times\gamma\div4)\div([\sigma_{0.2}]\times\varphi)$, P is a pressure of compressed air inputted to an ultrasonic welding apparatus, D is a cylinder diameter of the ultrasonic welding apparatus, $\gamma$ is a proportion of pressure applied in the first areas, $[\sigma_{0.2}]$ is a yield strength of the tab sheets, and $\varphi$ is a residual strength coefficient of the tab sheets under an action of welding heat.

9. The battery cell according to any one of claims 1 to 8, wherein the first area is an area with a highest compaction degree on the gathered portion.

10. The battery cell according to any one of claims 1 to 9, wherein the gathered portion is composed of the first areas and the second area.

11. The battery cell according to any one of claims 1 to 10, wherein the gathered portion is directly welded to the terminal post to form the connecting portion jointly through the gathered portion and the terminal post.

12. The battery cell according to any one of claims 1 to 10, wherein the battery cell further comprises an adapter sheet, the gathered portion is indirectly connected to the terminal post through the adapter sheet, and the gathered portion is directly welded to the adapter sheet to form the connecting portion jointly through the gathered portion and the adapter sheet.

13. The battery cell according to any one of claims 1 to 12, wherein the terminal post comprises a terminal post body mounted to the case, an accommodating groove is formed on the terminal post body, and at least part of the gathered portion is accommodated in the accommodating groove.

14. The battery cell according to claim 13, wherein an accommodating cavity is formed in the case, the accommodating groove is open towards a direction away from the accommodating cavity, the terminal post body is provided with a communicating hole, the communicating hole runs through a sidewall of the accommodating groove close to the accommodating cavity and communicates the accommodating cavity with the accommodating groove, and the gathered portion is arranged in the communicating hole in a penetrating manner.

15. The battery cell according to claim 14, wherein the terminal post comprises a terminal post cover plate covering the terminal post body, an electrolyte filling hole communicated with the accommodating groove is formed in the terminal post cover plate, and the battery cell further comprises a sealing structure used for sealing the electrolyte filling hole.

16. A battery, comprising the battery cell according to any one of claims 1 to 15.

17. A power consuming apparatus, comprising the battery according to claim 16.

18. An ultrasonic welding head used for processing the gathered portion according to any one of claims 1 to 17, wherein a welding surface of the ultrasonic welding head comprises a first surface portion and a second surface portion, the first surface portion protrudes from the second surface portion, the first surface portion is used for correspondingly processing the first area, and the second surface portion is used for correspondingly processing the second area.

19. The ultrasonic welding head according to claim 18, wherein the first surface portion is a protruding curved surface.

20. The ultrasonic welding head according to claim 19, wherein a cross section of the first surface portion is arc-shaped and has a radius ranging from 0.2 mm to 0.5 mm.

21. The ultrasonic welding head according to any one of claims 18 to 20, wherein the first surface portion and the second surface portion are connected at a connecting position through curved-surface smooth transition.

22. The ultrasonic welding head according to any one of claims 18 to 21, wherein the first surface portion is long strip-shaped and two first surface portions are provided and arranged in parallel.

23. The ultrasonic welding head according to any of claims 18 to 22, wherein a protrusion height of the first surface portion relative to the second surface portion ranges from 0.05 mm to 0.2 mm.

24. An ultrasonic welding apparatus, comprising a welding seat and the ultrasonic welding head according to any one of claims 18 to 23.

FIG. 1

FIG. 2

FIG. 3

FIG. 4

A–A

FIG. 5

FIG. 6

FIG. 7

FIG. 8

C

721    7221 ⎫
       7222 ⎬ 722
       7221 ⎭

FIG. 9

D   2   1   2

72   +         −   72

72            71

FIG. 10

FIG. 11

FIG. 12

FIG. 13

FIG. 14

FIG. 15

FIG. 16

FIG. 17

FIG. 18

FIG. 19

## INTERNATIONAL SEARCH REPORT

| International application No. |
| --- |
| **PCT/CN2024/096382** |

### A.  CLASSIFICATION OF SUBJECT MATTER

H01M50/249(2021.01)i

According to International Patent Classification (IPC) or to both national classification and IPC

### B.  FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT, WPABSC, WPABS, ENTXT, DWPI, ENTXTC, Patentics: 宁德时代新能源科技股份有限公司, 吴凯, 陈从胜, 林文法, 丁宇, 黄标, 极耳, 极电体, 收拢, 压紧, 压实, 焊头, 焊接头, 凸, 凹, 超声, 连接件, 连接片, 转接片, 极柱, 面积, 屈服, 压力, 压强, pole, tab, piece+, fold+, press+, solder+, weld+, protruding, projecting, stress, pressure, ultrasonic

### C.  DOCUMENTS CONSIDERED TO BE RELEVANT

| Category* | Citation of document, with indication, where appropriate, of the relevant passages | Relevant to claim No. |
| --- | --- | --- |
| Y | CN 219643070 U (ZHONGCHUANG XINHANG TECHNOLOGY GROUP CO., LTD.) 05 September 2023 (2023-09-05)<br>description, paragraphs 21-65, and figures 1-4 | 1-3, 7, 9-24 |
| Y | WO 2020066240 A1 (PANASONIC CORP.) 02 April 2020 (2020-04-02)<br>description, paragraphs 15-36, and figures 1-16 | 1-3, 7, 9-24 |
| Y | JP 2019139954 A (TOYOTA MOTOR CORP.) 22 August 2019 (2019-08-22)<br>description, paragraphs [0010]-[0024], and figures 1-6 | 1-3, 7, 9-24 |
| Y | CN 219739237 U (NINGDE CONTEMPORARY AMPEREX TECHNOLOGY CO., LTD.) 22 September 2023 (2023-09-22)<br>description, paragraphs 270-304, and figures 5-15 | 13-24 |
| A | CN 216413218 U (NINGDE CONTEMPORARY AMPEREX TECHNOLOGY CO., LTD.) 29 April 2022 (2022-04-29)<br>entire document | 1-24 |

☑ Further documents are listed in the continuation of Box C.    ☑ See patent family annex.

| | |
| --- | --- |
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **06 August 2024** | **19 August 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/096382** |

**C.    DOCUMENTS CONSIDERED TO BE RELEVANT**

| Category* | Citation of document, with indication, where appropriate, of the relevant passages | Relevant to claim No. |
|---|---|---|
| A | CN 215145715 U (CHINA LITHIUM BATTERY TECHNOLOGY CO., LTD.) 14 December 2021 (2021-12-14)<br>    entire document | 1-24 |
| A | CN 219457947 U (BEIJING WELION NEW ENERGY TECHNOLOGY CO., LTD.) 01 August 2023 (2023-08-01)<br>    entire document | 1-24 |
| A | CN 217719893 U (ZHONGCHUANG XINHANG TECHNOLOGY CO., LTD.) 01 November 2022 (2022-11-01)<br>    entire document | 1-24 |
| A | CN 115692820 A (ENVISION POWER TECHNOLOGY (JIANGSU) CO., LTD. et al.) 03 February 2023 (2023-02-03)<br>    entire document | 1-24 |

Form PCT/ISA/210 (second sheet) (July 2022)

**INTERNATIONAL SEARCH REPORT**
Information on patent family members

International application No.

**PCT/CN2024/096382**

| Patent document cited in search report | | | Publication date (day/month/year) | Patent family member(s) | | | Publication date (day/month/year) |
|---|---|---|---|---|---|---|---|
| CN | 219643070 | U | 05 September 2023 | None | | | |
| WO | 2020066240 | A1 | 02 April 2020 | US | 2022037750 | A1 | 03 February 2022 |
| | | | | JPWO | 2020066240 | A1 | 09 September 2021 |
| | | | | CN | 112534637 | A | 19 March 2021 |
| | | | | CN | 112534637 | B | 03 November 2023 |
| JP | 2019139954 | A | 22 August 2019 | JP | 6975387 | B2 | 01 December 2021 |
| CN | 219739237 | U | 22 September 2023 | None | | | |
| CN | 216413218 | U | 29 April 2022 | None | | | |
| CN | 215145715 | U | 14 December 2021 | None | | | |
| CN | 219457947 | U | 01 August 2023 | None | | | |
| CN | 217719893 | U | 01 November 2022 | None | | | |
| CN | 115692820 | A | 03 February 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311359896